# EUROPÄISCHE PATENTSCHRIFT

(11) **EP 3 084 259 B1**
(45) Veröffentlichungstag und Bekanntmachung des Hinweises auf die Patenterteilung: **16.10.2019**
(21) Anmeldenummer: 14821071.9
(22) Anmeldetag: 17.12.2014
(51) Int. Cl.: F16F 9/46

(54) **REGELBARER SCHWINGUNGSDÄMPFER FÜR KRAFTFAHRZEUGE**
CONTROLLABLE VIBRATION DAMPER FOR MOTOR VEHICLES
AMORTISSEUR RÉGLABLE DE VIBRATIONS POUR VÉHICULES AUTOMOBILES

(30) Priorität: 17.12.2013 DE 102013114169
(43) Veröffentlichungstag der Anmeldung: 26.10.2016
(73) Patentinhaber: ThyssenKrupp Bilstein GmbH, 58256 Ennepetal (DE)
(72) Erfinder: HAMERS, Wolfgang, 52428 Jülich (DE); GÖTZ, Ole, 38112 Braunschweig (DE); SCHMIDT, Klaus, 51519 Odenthal (DE); SMELJANSKI, Dmitrij, 51373 Leverkusen (DE)
(74) Vertreter: thyssenkrupp Intellectual Property GmbH
(86) Internationale Anmeldenummer: PCT/EP2014/003409
(87) Internationale Veröffentlichungsnummer: WO 2015/090589

(56) Entgegenhaltungen:
- EP-A1- 0 616 146
- EP-A1- 2 444 688
- EP-A2- 1 975 453
- EP-A2- 2 505 869
- US-A- 5 425 398

## Beschreibung

Die vorliegende Erfindung betrifft einen regelbaren Schwingungsdämpfer gemäß dem Oberbegriff des Anspruches 1.

### STAND DER TECHNIK

Ein solcher Schwingungsdämpfer ist aus der DE 44 41 047 C1 bekannt. An einem axial innerhalb eines Zylinderrohres geführten Kolben sind druckabhängige Dämpfungsventile für einen Austausch von Fluid in der Zug- und Druckstufe zwischen zwei Arbeitsräumen vorgesehen. Eine Vorsteuerung wirkt derart, dass ein steuerbarer Druck in Vorsteuerkammern aufgebaut wird. Der Vorsteuerdruck beaufschlagt die Ventilscheiben der Dämpfungsventile in deren geschlossene Stellung. Durch ein Bypasskanalsystem wird Fluid aus den Arbeitsräumen in die Vorsteuerkammern geleitet und so der Druck dort erhöht. Der Vorsteuerdruck wird mithilfe eines in dem Bypasskanalsystem angeordneten, extern einstellbaren Vorsteuerventils geregelt. Ein elastisches Element bildet die Abtrennung zwischen der Vorsteuerkammer und dem Arbeitsraum.

Ein weiterer Schwingungsdämpfer, der nach demselben Prinzip arbeitet, ist aus der DE 101 04 640 C1 bekannt. Hierin werden die Vorsteuerkammern durch Druckräume gebildet. Diese Druckräume werden durch jeweils ein Druckraumgehäuse und eine Dichtung, die beweglich auf einem Dämpfungsventil aufliegt, gebildet.

Die WO 2010/122102 A1 offenbart weiteren Schwingungsdämpfer, der nach demselben Prinzip arbeitet. Eine Vordrossel, durch die Hydrauliköl in das Bypasskanalsystem einströmen kann, ist durch eine Bohrung mit festgelegtem Querschnitt in einem Gehäuseteil des Dämpfungsventils ausgeführt.

In der US 7,694,785 B2 ist eine Vordrossel für einen analogen Anwendungsfall vorgesehen. Diese Vordrossel wird durch ein Scheibenpaket gebildet, durch welches auch das Hauptdämpfungsventil gebildet wird

Des Weiteren offenbart die EP 0 616 146 A1 einen Schwingungsdämpfer gemäß dem Oberbegriff des Anspruchs 1.

Der Aufbau der Ventilbaugruppen dieser Schwingungsdämpfer ist aber teilweise recht komplex oder erfordert einzelne teils recht aufwendig herzustellende Bauteile. Ferner ist es häufig nicht möglich, lediglich durch einfachen Ersatz einzelner Komponenten die Charakteristik nur einzelner Funktionen des Dämpfers gezielt für andere Einsatzgebiete zu verändern.

### OFFENBARUNG DER ERFINDUNG

Es ist daher die Aufgabe der vorliegenden Erfindung, einen Schwingungsdämpfer mit vereinfachten Ventilbaugruppen bereitzustellen und insbesondere eine erhöhte Variabilität zu schaffen.

Die der Erfindung zugrunde liegende Aufgabe wird gelöst durch einen regelbaren Schwingungsdämpfer, insbesondere für ein Fahrzeugfahrwerk, umfassend ein Zylinderrohr, das ein darin abgedichtetes Hydraulikfluid aufweist, einen Kolben, der innerhalb des Zylinderrohres entlang einer Zylinderachse axial bewegbar ist und der den Zylinder in zwei Arbeitsräume unterteilt, eine Kolbenstange, die parallel zur Zylinderachse ausgerichtet ist und an einem Ende mit dem Kolben verbunden ist. Im Kolben sind mehrere Fluiddurchführungen von einem Arbeitsraum in den anderen Arbeitsraum vorgesehen. Eine erste Ventilbaugruppe ist zur Dämpfung der Kolbenbewegung in einer ersten Betätigungsrichtung (z.B. während der Druckstufe) an einer ersten Fluiddurchführung angeordnet; eine zweite Ventilbaugruppe ist zur Dämpfung der Kolbenbewegung in einer zweiten Betätigungsrichtung (z.B. während der Zugstufe) an einer zweiten Fluiddurchführung angeordnet. Jede Ventilbaugruppe weist zumindest eine Ventilscheibe auf, die in einer geschlossenen Ventilstellung auf einem Ventilsitz aufsitzt und so die zugehörige Fluiddurchführung abdeckt, und die in einer geöffneten Ventilstellung zumindest teilweise von dem Ventilsitz entfernt ist.

Jede Ventilbaugruppe umfasst eine Vorsteuerkammer, wobei ein Druck in der Vorsteuerkammer die Ventilscheibe in die geschlossene Ventilstellung beaufschlagt, zusätzlich zu einer Federkraft. Der Federkraftverlauf, also die Kraft über dem Öffnungshub, ist über Federscheiben bzw. über Druckfedern einstellbar. Insbesondere wird mit Hilfe der Feder die Weichkennung abgestimmt, wenn kein Druck in der Vorsteuerkammer herrscht.

Der Druck in den jeweiligen Vorsteuerkammern ist einstellbar. Der erfindungsgemäße Schwingungsdämpfer ist dadurch gekennzeichnet, dass zumindest eine, insbesondere beide, der Vorsteuerkammern durch einen Boden, eine relativ zum Boden feststehende zylindrische Seitenwand, welche zur Zylinderrohrachse koaxial angeordnet ist, sowie einen radial innerhalb der zylindrischen Seitenwand gehaltenen und parallel zur Zylinderrohrachse bewegbaren formstabilen Deckel begrenzt ist. Zentral, also radial innen, kann die Vorsteuerkammer, von der insbesondere exakt eine pro Ventilbaugruppe vorgesehen ist, durch eine zylindrische Innenwandung begrenzt sein, insbesondere eine Hülse oder auch durch einen Befestigungszapfen selbst.

Es ergibt sich durch diese Anordnung innerhalb einer Ventilbaugruppe ein Kolben-Zylindersystem, wobei der Zylinder durch die zylindrische Seitenwand und den Boden begrenzt wird. Der Deckel stellt den Kolben dar. Der Deckel wird nun je nach Druck in der Vorsteuerkammer axial beaufschlagt. Durch die axiale Beaufschlagung des Kolbens wird wiederum die Vorsteuerkraft auf die Ventilscheibe ausgeübt. Es ist auch möglich, dass die Ventilscheibe einstückig mit dem Deckel ausgebildet ist. Insbesondere wenn exakt eine Vorsteuerkammer pro Ventilbaugruppe vorgesehen ist, erstreckt sich die Vorsteuerkammer ringförmig um den Befestigungszapfen herum. Ebenso ist der Deckel ringförmig ausgebildet und umschließt den Befestigungszapfen; axial außen wird der Deckel durch die Seitenwand geführt. Folglich bildet die Vorsteuerkammer einen Ringzylinder und der Deckel bildet einen in dem Ringzylinder geführten Ringkolben.

Ein wesentlicher Vorteil ist, dass die benötigte Teilezahl für eine solche Ventilbaugruppe deutlich reduziert ist gegenüber bekannten Ventilbaugruppen mit ähnlicher Funktionalität. Dabei können weitgehend massive Elemente zur Bengrenzung der Vorsteuerkammer verwendet werden; der Einsatz von elastischen Bauelementen zur Begrenzung der Vorsteuerkammer, die grundsätzlich eine hohe Verschleißanfälligkeit aufweisen und empfindlicher sind, kann entfallen.

Vorzugsweise ist der Boden von zumindest einer der Ventilbaugruppen gemeinsam mit dem Kolben auf einem Befestigungszapfen verspannt. Dabei können die Böden der beiden Vorsteuerkammern sowie der Kolben gemeinsam über eine einzige Schraubverbindung an dem Befestigungszapfen der Kolbenstange angeordnet sein. Insbesondere erfolgt die Verspannung mittels einer Mutter, die auf einem Gewinde des Befestigungszapfens aufgeschraubt ist. Der Befestigungszapfen ist fest mit der Kolbenstange verbunden. Der Befestigungszapfen kann auch einstückig mit der Kolbenstange ausgebildet sein.

In einem axialen Bereich des Dämpfers, in dem einer der Deckel angeordnet ist, können die Stützkräfte mit Hilfe von Hülsen zwischen dem Boden und dem Kolben übertragen werden. Insofern stützt sich in einer vorteilhaften Ausgestaltung der Boden einer der Ventilbaugruppen mittels einer separaten Hülse an dem Kolben ab, wobei die Hülse um die Kobenstange herum angebracht ist. In einer anderen Ausgestaltung kann eine solche Hülse einstückig mit dem Boden ausgebildet sein. Die Hülse kann in beiden Ausgestaltungen die zylindrische Innenwand der Vorsteuerkammer bilden.

Der grundsätzliche Aufbau dieses erfindungsgemäßen Schwingungsdämpfers ermöglicht es, dass durch Austausch einiger weniger Bauteile, insbesondere durch Austausch des Deckels, der Schwingungsdämpfer an unterschiedliche Spezifikationen angepasst werden kann. Dies wird im Laufe der weiteren Beschreibung noch deutlicher.

In einer ersten bevorzugten Ausgestaltung wird die Ventilscheibe durch den formstabilen Deckel ausgebildet. Der Deckel ist folglich einstückig mit der Ventilscheibe ausgestaltet. Der Deckel stellt dann selbst die Ventilscheibe dar. Die Ventilscheiben ist durch eine axiale Bewegung des Deckels von dem Ventilsitz lösbar. Der gesamte Deckel muss also axial verlagert werden, damit die Ventilscheibe in die geöffnete Stellung überführt wird.

In einer zweiten bevorzugten Ausgestaltung ist die Ventilscheibe separat zum Deckel ausgebildet und elastisch verformbar. Die separate Ventilscheibe ist zwischen dem Deckel und dem Ventilsitz angeordnet. Für ein Lösen der Ventilscheibe vom Ventilsitz muss der Deckel nicht zwangsläufig bewegt werden; die axiale Position des Deckels und damit die durch den Deckel bewirkte Beaufschlagung der Ventilscheibe beeinflusst die Dämpfungscharakteristik. Vorzugsweise weist der Deckel eine Steuerkante auf, an der die Ventilscheibe auf Ihrer dem Ventilsitz abgewandten Seite zur Anlage kommt, wobei die Steuerkante radial weiter innen angeordnet ist als der Ventilsitz. Die Steuerkante legt durch ihre radiale Position im Wesentlichen den Knickpunkt fest, ab dem es der Ventilscheibe ermöglicht ist, der Druckbeaufschlagung des Fluids in der Fluiddurchführung nachzugeben und vom Ventilsitz abzuheben. Die radiale Position der Steuerkante, die insbesondere umlaufend um die Zylinderrohrachse und vorzugsweise ringförmig umlaufend mit konstantem Radius ausgebildet ist, hat somit einen wesentlichen Einfluss auf die Charakteristik der Ventilbaugruppe und damit des Schwingungsdämpfers.

Es kann vorgesehen sein, dass die Ventilscheibe auf derjenigen axialen Seite, die dem Ventilsitz zugewandt ist, im radialen Bereich der Steuerkante frei liegt. Dies ermöglicht es, die Ventilscheibe durch die Beaufschlagung durch den Deckel unter eine gewisse Vorspannung zu setzen, da sie durch die entgegengesetzte Beaufschlagung zwischen Ventilsitz und Steuerkante auf Biegung beansprucht wird. Durch eine solche Vorspannung kann beispielsweise ein Mindestdruck festgelegt werden, ab dem ein Öffnen des Dämpfungsventils erfolgen kann.

Der Deckel weist in einer bevorzugten Alternative anstelle der Steuerkante eine Steuerfläche auf, an der die Ventilscheibe auf ihrer dem Ventilsitz abgewandten axialen Seite zur Anlage kommt, wobei sich die Steuerfläche, radial von innen nach außen betrachtet, also insbesondere mit wachendem Radius, axial vom Ventilsitz entfernt. Die Steuerfläche ist dabei insbesondere stetig gekrümmt, weist also vorzugsweise keine Stufen auf. Zumindest ein Teil der Steuerfläche befindet insbesondere sich in einem Bereich, der radial weiter innen angeordnet ist als der Ventilsitz. Durch diese Steuerfläche kann die exakte Bewegungsform der Ventilscheibe beim Lösen von dem Ventilsitz unmittelbar vorgegeben werden. Die Steuerfläche stellt dabei eine Anlagefläche bereit, an der sich die Ventilscheibe in der geöffneten Stellung anlegen kann. So bildet die Steuerfläche einen flächigen Anschlag für die Ventilscheibe. Die Charakteristik des Schwingungsdämpfers kann durch die Form und Position der Steuerfläche maßgeblich beeinflusst werden.

Vorzugsweise überragt dabei die Steuerfläche radial außen den Ventilsitz. Das bedeutet, dass die Steuerfläche auch eine Anlagefläche für die Ventilscheibe in einem Bereich bereitstellt, der radial außerhalb des Ventilsitzes ist. Die Bewegung der Ventilscheibe auch radial außen kann damit weitgehend kontrolliert werden.

Bei der ersten bevorzugten Ausgestaltung wirkt sich der Vorsteuerdruck nun mittelbar auf die Dämpfkraft aus. Bei den Varianten der zweiten bevorzugten Ausgestaltungen mit separater Ventilscheibe erfolgt hingegen die Ansteuerung der Ventilscheibe durch den Vorsteuerdruck nicht direkt sondern indirekt. Es wird nämlich durch die Steuerkante bzw. die Steuerfläche zunächst die Vorspannung der Ventilscheibe beeinflusst. Die Vorspannung wiederum wirkt sich dann auf das Drosselverhalten aus. So kann die flexible Ventilscheibe eine Dämpfungswirkung bereitstellen und so wiederum unerwünschte Druckspitzen in der Vorsteuerkammer abdämpfen und damit nachteilige Kraftspitzen am gesamten Schwingungsdämpfer reduzieren. Insbesondere die andere Vorsteuerkammer der nicht aktiven Stufe, die aber mit der Vorsteuerkammer der aktiven Stufe verbunden ist, wirkt dann wie eine Art Dämpfungsreservoir. Das Vermeiden von Druckspitzen verhindert ferner, dass das Vorsteuerventil aufgrund einer solchen Druckspitze zu stark öffnet und dadurch der Druck wiederum zu schnell abgebaut wird. Durch die Vorspannung kann ferner ein hohes Dämpfkraftniveau zuverlässig eingestellt werden, da die freie Biegelänge der Ventilscheibe gezielt verkürzt werden kann. Zugleich wird allerdings durch die Formstabilität des Deckels sichergestellt, dass die Vorspannung der Ventilscheibe mit hoher Dynamik während des Betriebs eingestellt werden kann.

Der Deckel kann im Wesentlichen auch mehrteilig ausgebildet sein. So kann der Deckel einen Aufsatz aufweisen, der die tatsächliche Steuerkante bzw. die Steuerfläche trägt.

Vorzugsweise ist zur Befüllung der Vorsteuerkammern mit Hydraulikfluid zwischen jeweils einem Arbeitsraum und einer Vorsteuerkammer eine Fluiddurchführung vorgesehen, die mit jeweils einer Vordrosselanordnung versehen ist. Durch diese Fluiddurchführung ist es möglich, dass der Druck in den Arbeitsräumen zum Aufbau des Vorsteuerdrucks in den Vorsteuerkammern verwendet wird. Die Vordrosselanordnung ermöglicht es dabei, den Aufbau des Vorsteuerdrucks gezielt in Abhängigkeit zum Druck in dem zugeordneten Arbeitsraum einzustellen.

Es ist dabei bevorzugt, dass die Vordrosselanordnung eine Bypassscheibe umfasst, welche einen Öffnungsquerschnitt bereitstellt, der kleiner ist als ein minimaler Öffnungsquerschnitt der zugehörigen Fluiddurchführung. Unabhängig von der Ausgestaltung der Fluiddurchführung kann somit weitgehend durch die Auswahl der Bypassscheibe die Drosselwirkung eingestellt werden. Im Gegensatz zu herkömmlichen Drosseln in diesem Anwendungsbereich ergibt sich eine erhöhte Variabilität, da durch einfachen Austausch der Bypassscheibe die Drosselwirkung eingestellt werden kann. Die Bypassscheibe kann mit einer oder mehreren radialen Kerben versehen sein, welche den Öffnungsquerschnitt definieren.

Bevorzugt umfasst die Vordrosselanordnung ferner eine Deckscheibe, welche die Bypassscheibe in Richtung einer Öffnung der Fluiddurchführung beaufschlagt, insbesondere über die vollständige Fläche der Bypassscheibe. Die Deckscheibe stellt insbesondere sicher, dass die Bypassscheibe stets fest an der Öffnung der Fluiddurchführung anliegt. So wird ein unkontrolliertes Durchbiegen der Bypassscheibe und damit Öffnen der Drossel, was zu unerwünschten Schwingungen im Drosselverhalten führen kann, verhindert.

Vorzugsweise liegt die Bypassscheibe am Boden außerhalb der Vorsteuerkammer an. Die Bypassscheibe bedeckt also die Öffnung auf der Seite des Arbeitsraumes. Die Bypassscheibe wird somit konstruktiv entkoppelt von den Bauteilen, die die Vorsteuerkammer begrenzen oder das Hauptdämpfungsventil selbst bilden. Es lassen sich so recht einfache Bauteile für die Zusammensetzung der Vordrosselanordnung verwenden. Modifikationen an der Vorsteuerkammer, am Hauptdämpfungsventil oder an der Vordrosselanordnung können so separat vorgenommen werden, ohne dass dies eine Auswirkung auf die anderen Einheiten zwangsläufig nach sich zieht.

Die Fluiddurchführungen können Teile eines Bypasskanalystems sein, durch welches die beiden Vorsteuerkammern miteinander verbunden sind. Eine erste solche Fluiddurchführung verbindet den zweiten Arbeitsraum mit der ersten Vorsteuerkammer; eine zweite solche Fluiddurchführung verbindet den ersten Arbeitsraum mit der zweiten Vorsteuerkammer. Eine solche Fluiddurchführung ist vorzugsweise durch den Boden hindurchgeführt, welche die jeweilige Vorsteuerkammer begrenzt. Die Verbindung der beiden Vorsteuerkammern kann durch Verbindungsdurchführungen erfolgen, die insbesondere in den Befestigungszapfen eingebracht sind.

Die Fluiddurchführung ist vorzugsweise durch ein Einwegeventil verschlossen, welches zwar Fluid von dem Arbeitsraum in die Vorsteuerkammer hindurch lässt, ein Zurückströmen von Fluid durch die Fluiddurchführung von der Vorsteuerkammer in den Arbeitsraum aber verhindert oder zumindest erheblich erschwert. Das Einwegeventil kann durch eine Ventilscheibe gebildet sein, die in der Vorsteuerkammer innen auf dem Boden aufliegt und folglich eine Öffnung des Fluiddurchgangs in der Innenseite der Vorsteuerkammer bedeckt. Diese das Einwegeventil bildende Ventilscheibe kann insbesondere fliegend gelagert sein und durch ein Federelement auf den Boden beaufschlagt werden. Es wird vorzugsweise ein Federelement verwendet, welches auch den Deckel in Richtung des Ventilsitzes mit einer Federkraft beaufschlagt. Das Rückschlagventil ist insbesondere stromabwärts der Vordrosselanordnung angeordnet. Alternativ kann die das Einwegeventil bildende Ventilscheibe auch an ihrem Innenradius fest eingespannt sein. Die Rückstellkraft kann durch die sich durchbiegende Ventilscheibe selbst bereitgestellt werden.

Die vorstehenden Ausführungen sowie die Ausführungen zu den bevorzugten Ausgestaltungen verdeutlichen, dass z.B. durch Austausch des Deckels durch einen Deckel insbesondere mit einer speziellen Steuerkante oder einer speziellen Steuerfläche oder durch das Ersetzen von Ventilscheiben im Bereich der Ventilbaugruppe, die Anordnung insgesamt an neue Rahmenbedingungen und Anwendungsfälle angepasst werden kann. Grundsätzlich unterstützt der vorgeschlagene Aufbau eine Gleichteile-Strategie.

### BEVORZUGTE AUSFÜHRUNGSBEISPIELE DER ERFINDUNG

Weiter, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: einen erfindungsgemäßen Schwingungsdämpfer mit einer Ventilbaugruppe in einer ersten Ausgestaltung im Querschnitt;
- Fig. 2a: ausschnittsweise eine Ventilbaugruppe in einer zweiten Ausgestaltung im Querschnitt für einen Schwingungsdämpfer nach Figur 1;
- Fig. 2b: ausschnittsweise eine Ventilbaugruppe in einer dritten Ausgestaltung im Querschnitt für einen Schwingungsdämpfer nach Figur 1;
- Fig. 2c: ausschnittsweise eine Ventilbaugruppe in einer vierten Ausgestaltung im Querschnitt für einen Schwingungsdämpfer nach Figur 1; und
- Fig. 3: eine Ventilbaugruppe in einer Ausführung gemäß Figur 2a.

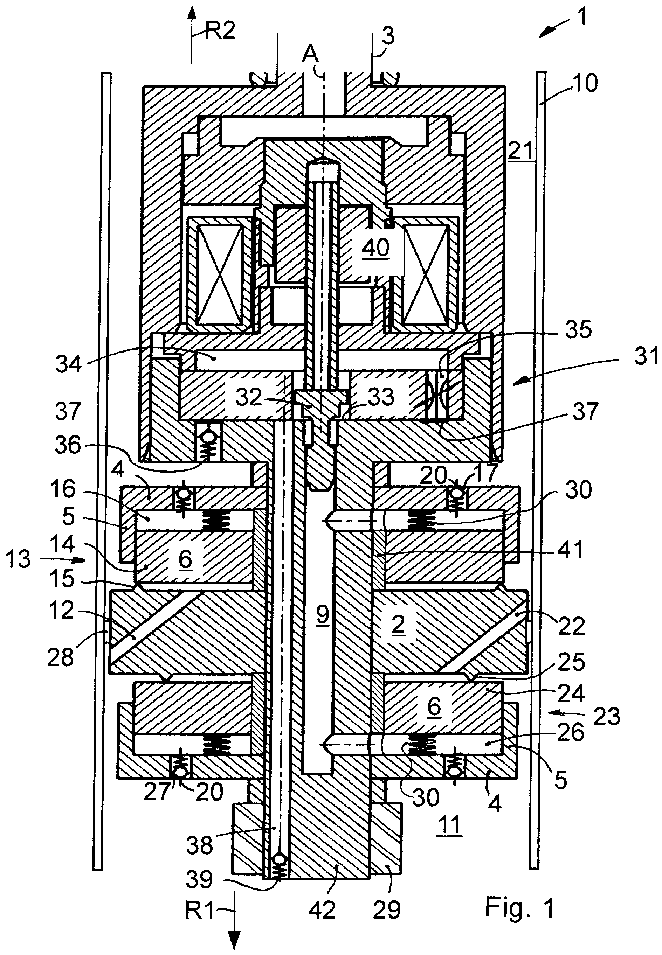

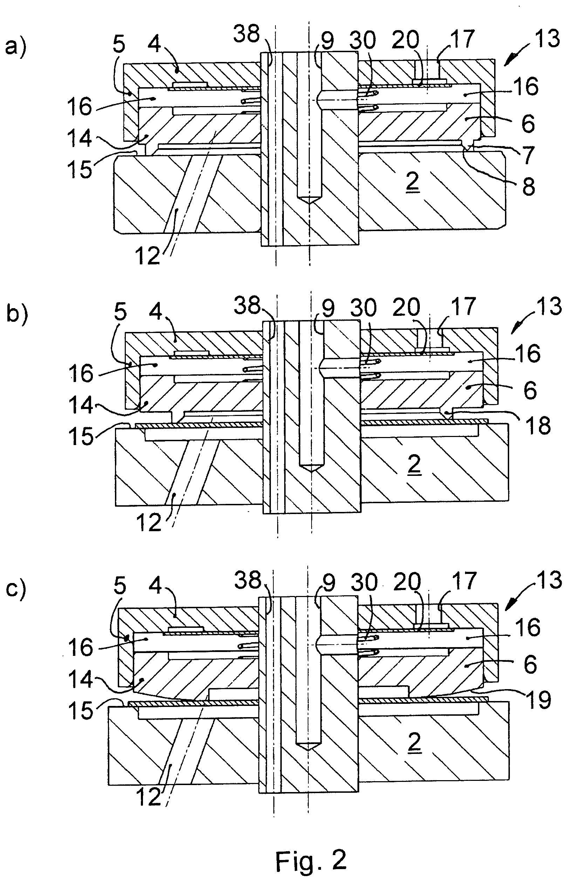

Figur 1 zeigt den Ausschnitt eines erfindungsgemäßen Schwingungsdämpfers 1 im Querschnitt in einer ersten Ausgestaltung. Der beschriebene prinzipielle Aufbau sowie die Funktionsweise treffen auch auf die weiteren Ausgestaltungen der Figuren 2a bis 2c zu, sofern nicht anders angegeben.

Der Schwingungsdämpfer 1 umfasst ein Zylinderrohr 10, in dem ein Kolben 2 entlang einer Zylinderrohrachse A verschiebbar gehalten ist. Der Kolben 2 weist an seinem Außenumfang eine Ringdichtung 28 auf, so dass der Kolben 2 das Zylinderrohr 10 in einen ersten Arbeitsraum 11 und in einen zweiten Arbeitsraum 21 abdichtend unterteilt. Der Kolben 2 ist an einem Befestigungszapfen 42 befestigt, der wiederum fest mit einer Kolbenstange 3 verbunden ist. Bei Betätigung der Kolbenstange 3 in einer ersten Betätigungsrichtung R1 hin zum ersten Arbeitsraum 11 erhöht sich der Druck im ersten Arbeitsraum 11. Fluid, welches im ersten Arbeitsraum 11 vorhanden ist, wird dann durch eine erste Fluiddurchführung 12 im Kolben 2 in den zweiten Arbeitsraum 21 gefördert. Bei der Förderung des Fluids durch die erste Fluiddurchführung 12 fließt das Fluid durch eine erste Ventilbaugruppe 13 mit einer Ventilscheibe 14. Bei Erreichen eines Mindestdrucks des Fluids in dem ersten Arbeitsraum wird die erste Ventilscheibe 14, welche mit Vorspannung auf einem ersten Ventilsitz 15 aufsitzt, von dem ersten Ventilsitz 15 zumindest teilweise gelöst. So wird die Ventilscheibe von der geschlossenen Stellung in die geöffnete Stellung überführt. Eine hydraulische Verbindung wird so zwischen dem ersten Arbeitsraum 12 und dem zweiten Arbeitsraum 21 hergestellt. Dabei wirkt die erste Ventilscheibe 14 im Zusammenspiel mit dem ersten Ventilsitz 15 als Drossel, wodurch das Fluid abgebremst wird. Dies führt zu einer Dämpfung der Kolbenbewegung.

Im vorliegenden Ausführungsbeispiel ist die Ventilscheibe 14 durch einen formstabilen Deckel 6 einer ersten Vorsteuerkammer 16 gebildet. Der formstabile Deckel 6 ist axial beweglich gegenüber dem Befestigungszapfen 42 angeordnet und wird durch einen in der Vorsteuerkammer 16 herrschenden Vorsteuerdruck in Richtung des Ventilsitzes 15 beaufschlagt. Dieser Vorsteuerdruck in der ersten Vorsteuerkammer 16 kann während des Betriebs definiert eingestellt werden. Die erste Vorsteuerkammer 16 wird ferner gebildet durch einen Boden 4, der fest mit dem Befestigungszapfen 42 verbunden ist. Seitlich wird die erste Vorsteuerkammer 16 durch eine zylindrische Seitenwand 5 begrenzt. Im Zentrum bildet der Befestigungszapfen 42 bzw. Hülsen 41, die um den Befestigungszapfen 42 herum gebildet sind, eine innenzylindrische Wandung koaxial zur Zylinderrohrachse A. Anstelle einer Hülse kann auch eine Innenwand vorgesehen sein, die fest mit dem Boden 4 ausgebildet ist.

Die erste Vorsteuerkammer 16 bildet somit einen Ringraum, der koaxial um den Befestigungszapfen 42 herum angeordnet ist. Durch eine Rückstellfeder 30 wird der Deckel 6 in Richtung auf den Ventilsitz 15 beaufschlagt. Es ist ersichtlich, dass die Dämpfungskraft, die durch die erste Ventilbaugruppe 13 bereitgestellt wird, umso höher ist, je höher der Druck (im folgenden Vorsteuerdruck) in der ersten Vorsteuerkammer 16 ist.

Der Schwingungsdämpfer 1 umfasst ferner eine zweite Ventilbaugruppe 23, die identisch ausgestaltet ist zur ersten Ventilbaugruppe 13. Die zweite Ventilbaugruppe ist dafür vorgesehen die Strömung des Fluids abzubremsen, wenn der Kolben 2 in einer zweiten Betätigungsrichtung R2 bewegt wird. In diesem Fall strömt das Fluid von dem zweiten Arbeitsraum 21 über eine zweite Fluiddurchführung 22 in den ersten Arbeitsraum 11. Eine zweite Vorsteuerkammer 26 wird gleichermaßen durch einen Boden 4, eine zylindrische Seitenwand 5 und einen formstabilen axial bewegbaren Deckel 6 gebildet. Eine zweite Ventilscheibe 24 und ein zweiter Ventilsitz 25 sind denen der ersten Ventilbaugruppe 13 vergleichbar ausgebildet.

Die beiden Vorsteuerkammern 16, 26 sind miteinander hydraulisch über eine Verbingungsdurchführung 9 verbunden. Die Verbindungsdurchführung 9 umfasst eine axiale Bohrung in dem Befestigungszapfen 42 sowie zwei radiale Verbindungsbohrungen in dem Befestigungszapfen 42, jeweils zwischen der axialen Bohrung und den Vorsteuerkammern 16, 26. Im Wesentlichen herrscht in beiden Vorsteuerkammern 16, 26 stets derselbe Druck. Wenn nun der Kolben 2 in der ersten Betätigungsrichtung R1 bewegt wird, so strömt durch eine Fluiddurchführung 27 zwischen dem ersten Arbeitsraum 11 und der zweiten Vorsteuerkammer 26 Fluid aus dem ersten Arbeitsraum 11 in die zweite Vorsteuerkammer 26, wodurch der Vorsteuerdruck in der zweiten Vorsteuerkammer 26 erhöht wird. Durch die Verbingungsdurchführung 9 hindurch pflanzt sich der in der zweiten Vorsteuerkammer 26 aufgebaute Vorsteuerdruck auch in die erste Vorsteuerkammer 16 fort. Dadurch wird der Vorsteuerdruck in der ersten Vorsteuerkammer 16 erzeugt, mit dem das Dämpfungsverhalten der ersten Ventilbaugruppe 13 beeinflusst wird. Gleiches gilt für die Betätigung in der zweiten Betätigungsrichtung R2. In diesem Fall wird Fluid von dem zweiten Arbeitsraum 21 durch eine Fluiddurchführung 17 zwischen dem zweiten Arbeitsraum 21 und der ersten Vorsteuerkammer 16 in die erste Vorsteuerkammer 16 gefördert. Der Vorsteuerdruck, der so in der ersten Vorsteuerkammer 16 erzeugt wird, pflanzt sich wiederum durch die Verbingungsdurchführung 9 in die zweite Vorsteuerkammer 26 fort. Damit das Fluid durch die Fluiddurchführungen 17, 27 nicht in von der ersten Vorsteuerkammer 16 direkt in den zweiten Arbeitsraum 21 bzw. von der zweiten Arbeitkammer 26 in den ersten Arbeitsraum 11 strömen kann, sind in den Fluiddurchführungen 17, 27 jeweils ein Einwegeventil 20 angebracht. Dieses Einwegeventil 20 kann, wie in den Figur 2a bis c gezeigt ist, als Ventilscheibe ausgestaltet sein, die die Fluiddurchführung auf Seiten der jeweiligen Vorsteuerkammer 16 abdeckt. Zwischen der Ventilscheibe, die das Einwegeventil bildet, und der Öffnung der Fluiddurchführung kann eine Drosselscheibe angeordnet sein (nicht dargestellt).

Der Vorsteuerdruck in den beiden Vorsteuerkammern 16 und 26 kann geregelt werden. Hierzu ist ein Vorsteuerventil 31 vorgesehen, welches einen Ventilkörper 32 aufweist. Der Ventilkörper ist beweglich entlang der Zylinderrohrachse A gehalten und kann auf einem feststehenden (bezogen auf den Befestigungszapfen) Ventilsitz 33 aufsitzen. Wenn der Ventilkörper 32 auf dem Ventilsitz 33 aufsitzt, ist ein Abfließen von Fluid durch das Vorsteuerventil 31 weitgehend verhindert. Während einer solchen Phase kann der Vorsteuerdruck aufgebaut oder gehalten werden. Ist der Ventilkörper 32 von dem Ventilsitz 33 gelöst, so kann durch das Vorsteuerventil 31 Fluid aus der Verbindungsdurchführung abfließen; in dieser Phase kann der Vorsteuerdruck reduziert werden. Der Ventilkörper 32 wird dabei mittels eines magnetischen Aktuators 40 in die erste Betätigungsrichtung R1 beaufschlagt. In die zweite Betätigungsrichtung R2 wird der Ventilkörper 32 durch den Vorsteuerdruck beaufschlagt. Je nach den Kräfteverhältnissen, bedingt durch den magnetischen Aktuator 40 und den Vorsteuerdruck, ergibt sich dann die Stellung des Ventilkörpers 32 gegenüber dem Ventilsitz 33.

Das Fluid, welches durch das Vorsteuerventil 31 abfließt, fließt bei Betätigung der Kolbenstange in Richtung R1 (erhöhter Druck in erstem Arbeitsraum 11) durch einen zweiten Abflussdurchgang 34 zum zweiten Arbeitsraum 21. In dem zweiten Abflussdurchgang 34 ist auch eine Drossel 35 und ein Einwegeventil 36 angeordnet. Ein Einwegeventil 36 verhindert in diesem Fall, dass Fluid aus dem zweiten Arbeitsraum 21 durch das Vorsteuerventil 31 in Richtung der Vorsteuerkammern 16, 26 gelangen kann. Die Drossel 35 und das Einwegeventil 36 sind in unterschiedlichen Umfangspositionen angeordnet und über einen Ringkanal 37 miteinander hydraulisch verbunden.

Bei Betätigung der Kolbenstange 3 in Richtung R2 (erhöhter Druck in zweitem Arbeitsraum 21) fließt das durch das Vorsteuerventil 31 abfließende Fluid durch einen ersten Abflussdurchgang 38 zum ersten Arbeitsraum 11. Der erste Abflussdurchgang 38 ist durch eine axiale Bohrung in im Befestigungszapfen 42 gebildet. Das Einwegeventil 36 verhindert, dass Fluid aus dem zweiten Arbeitsraum 21 durch das Vorsteuerventil 31 in Richtung der Vorsteuerkammern 16, 26 gelangt. Der erste Abflussdurchgang 38 ist durch eine weitere axiale Bohrung in dem Befestigungszapfen 42 gebildet. In dem ersten Abflussdurchgang 38 ist das Einwegeventil 39 angeordnet.

Figur 2a zeigt eine alternative zweite Ausgestaltung der Ventilbaugruppe 13, die auch auf die zweite Ventilbaugruppe 23 angewendet werden kann. Der Ventilsitz 15 wird durch eine ebene Fläche auf dem Kolben 2 gebildet. Weiterhin ist die Ventilscheibe 14 einstückig mit dem Deckel 6 ausgebildet. Jedoch weist die Ventilscheibe 14 eine Ventilkante 7 auf, die umlaufend ausgebildet ist, und in der geschlossenen Stellung mit dem Ventilsitz 15 in Kontakt ist. Die Ventilkante 7 weist dabei eine innenkonische Fläche 8 auf, die sich in Richtung nach radial außen axial dem Ventilsitz 15 annähert.

Figur 2b zeigt eine alternative dritte Ausgestaltung der Ventilbaugruppe 13, die auch auf die zweite Ventilbaugruppe 23 angewendet werden kann. Es ist die Ventilscheibe 14 separat zum Deckel 6 ausgebildet. Der Deckel 6 beaufschlagt die Ventilscheibe 14 in Richtung geschlossene Stellung. Der Ventilsitz 15 wird von einem axialen Vorsprung gebildet, der ringförmig in Richtung der Ventilscheibe 14 vorsteht. Ferner weist der Deckel 6 eine Steuerkante 18 auf, die axial in Richtung des Ventilsitzes 15 hervorsteht und ebenfalls ringförmig umlaufend ausgebildet ist. Die Steuerkante 18 ist allerdings radial weiter innen angeordnet als der Ventilsitz 15. Die Beaufschlagung der Ventilscheibe 14 in die geschlossene Stellung erfolgt daher weiter innen, als der Ventilsitz 15 die Ventilscheibe 14 abstützt. Die Abstützung der Ventilscheibe 14 durch den Ventilsitz 15 erfolgt radial weiter außen. Insofern liegt die Ventilscheibe jeweils dort in der anderen Richtung frei, wo sie durch die Steuerkante 18 und den Ventilsitz 15 beaufschlagt wird. Durch den radialen Versatz zwischen Steuerkante 18 und Ventilsitz wird die Ventilscheibe in der geschlossenen Stellung unter Vorspannung gesetzt.

Figur 2c zeigt eine alternative vierte Ausgestaltung der Ventilbaugruppe 13, die auch auf die zweite Ventilbaugruppe 23 angewendet werden kann. Anstelle der Steuerkante der Ausgestaltung nach Figur 2b weist nun der Deckel 6 eine Steuerfläche 19 auf. Diese Steuerfläche 19 erstreckt sich über einen deutlich weiteren radialen Bereich auf dem Deckel 6, als dies die Steuerkante 18 vollzieht. Die Steuerfläche 19 entfernt sich dabei von dem Ventilsitz 15, je weiter die betrachtete Position nach radial außen wandert. Durch die Steuerfläche 19 wird das maximale Auslenken der Ventilscheibe 14 während des Öffnens vorgegeben. Die Öffnungscharakteristik kann durch individuelle Gestaltung der Steuerfläche vorgegeben werden.

Die anhand der Figuren 2a bis 2c beschriebenen Ventilbaugruppen können anstelle der in Figur 1 gezeigten Ventilbaugruppen 13 und 23 in den dort gezeigten Schwingungsdämpfer 1 eingebaut werden.

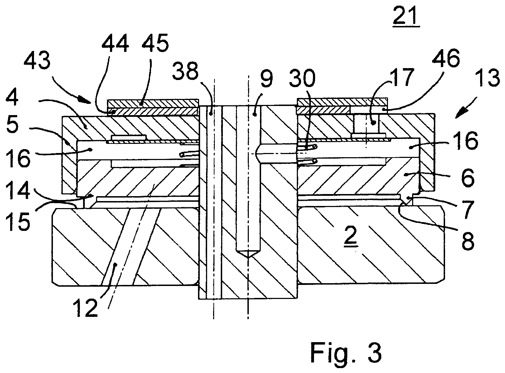

In Figur 3 ist der Schwingungsdämpfer in einer Ausführung gemäß Figur 2a gezeigt. Er ist ergänzt um eine Vordrosselanordnung 43. Die Vordrosselanordnung 43 umfasst eine Bypassscheibe 44, die auf Seiten des Arbeitsraumes, als außerhalb der Arbeitskammer 16, an dem Boden 4 anliegt und eine Öffnung der Fluiddurchführung 17 teilweise abdeckt. Auf der Bypassscheibe 44 liegt wiederum eine Deckscheibe 45 auf, die die Bypassscheibe 44 auf den Boden 4 beaufschlagt. Damit Fluid durch die Vordrosselanordnung 43 hindurch fließen kann weist die Bypassscheibe 44 eine radiale Kerbe 46 auf, die an der selben Umfangsposition angeordnet ist, wie die Öffnung der Fluiddurchführung 17. Durch die radiale Kerbe 46 kann das Hydraulikfluid aus dem Arbeitsraum in die Fluiddurchführung 17 einströmen. Der Öffnungsquerschnitt, den die radiale Kerbe 46 bereitstellt, ist geringer als der Querschnitt, der durch die Fluiddurchführung 17 gebildet ist. Insofern wird die Drosselwirkung an dem durch die Fluiddurchführung 17 einströmenden Fluid einzig durch die Vordrosselanordnung 43 bewirkt, ohne dass es zu einem weiteren merklichen Druckabfall in der Fluiddurchführung 17 selbst kommt. Durch einfaches Austauschen der Scheiben der Vordrosselanordnung 43 kann die Drosselwirkung eingestellt werden.

Die Ausgestaltung der Vordrosselanordnung 43 nach Figur 3 ist ohne weiteres auch auf die Ausgestaltungen nach den Figuren 1, 2b und 2c anwendbar und zudem auch auf die andere nicht dargestellte Ventilbaugruppe 23 anwendbar.

Die Möglichkeit, durch recht einfaches Austauschen des Deckels 6 oder der Ventilscheiben 14, 24 unterschiedliche Formen der Steuerkanten 8 oder Steuerfläche 9 einzubauen, sowie das Ersetzen von Teilen der Vordrosselanordnung 43 eröffnet eine Vielseitigkeit bei der Einstellung der grundlegenden Dämpfungscharakteristik neben der dynamischen Einstellbarkeit über den Vorsteuerdruck. Die Einstellungen können dabei so ausgeführt werden, dass die anderen Funktionseinheiten in ihrer Charakteristik möglichst unberührt bleiben.

### Bezugszeichenliste

- 1: Schwingungsdämpfer
- 2: Kolben
- 3: Kolbenstange
- 4: Boden
- 5: zylindrische Seitenwand
- 6: formstabiler bewegbarer Deckel
- 7: Ventilkante
- 8: innenkonische Fläche
- 9: Verbindungsdurchführung zwischen den beiden Vorsteuerkammern
- 10: Zylinderrohr
- 11: erster Arbeitsraum
- 12: erste Fluiddurchführung
- 13: erste Ventilbaugruppe
- 14: erste Ventilscheibe
- 15: erster Ventilsitz
- 16: erste Vorsteuerkammer
- 17: Verbindungsdurchführung zwischen zweitem Arbeitsraum 21 und erster Vorsteuerkammer 16
- 18: Steuerkante
- 19: Steuerfläche
- 20: Einwegeventil
- 21: zweiter Arbeitsraum
- 22: zweite Fluiddurchführung
- 23: zweite Ventilbaugruppe
- 24: zweite Ventilscheibe
- 25: zweiter Ventilsitz
- 26: zweite Vorsteuerkammer
- 27: Fluiddurchführung zwischen erstem Arbeitsraum 11 und zweiter Vorsteuerkammer 26
- 28: Ringdichtung
- 29: Mutter
- 30: Rückstellfeder
- 31: Vorsteuerventil
- 32: Ventilkörper
- 33: Ventilsitz
- 34: zweiter Abflussdurchgang zum zweiten Arbeitsraum
- 35: Drossel
- 36: Einwegeventil
- 37: Ringkanal
- 38: erster Abflussdurchgang zum ersten Arbeitsraum
- 39: Einwegeventil
- 40: magnetischer Aktuator
- 41: Hülse
- 42: Befestigungszapfen
- 43: Vordrosselanordnung
- 44: Bypassscheibe
- 45: Deckscheibe
- 46: radiale Kerbe

- A: Zylinderrohrachse
- R: Betätigungsrichtung

## Patentansprüche

1. Regelbarer Schwingungsdämpfer (1), insbesondere für ein Fahrzeugfahrwerk, umfassend ein Zylinderrohr (10), das ein darin abgedichtetes Hydraulikfluid aufweist, einen Kolben (2), der innerhalb des Zylinderrohres (10) entlang einer Zylinderrohrachse (A) axial bewegbar ist und der das Zylinderrohr (10) in zwei Arbeitsräume (11, 21) unterteilt, eine Kolbenstange (3), die parallel zur Zylinderrohrachse (A) ausgerichtet ist und an einem Ende mit dem Kolben (2) verbunden ist, wobei im Kolben (2) mehrere Fluiddurchführungen (12, 22) von einem Arbeitsraum (11, 21) in den anderen Arbeitsraum (21, 11) vorgesehen sind, wobei eine erste Ventilbaugruppe (13) zur Dämpfung der Kolbenbewegung in einer ersten Betätigungsrichtung (R1) an einer ersten Fluiddurchführung (12) angeordnet ist und wobei eine zweite Ventilbaugruppe (23) zur Dämpfung der Kolbenbewegung in einer zweiten Betätigungsrichtung (R2) an einer zweiten Fluiddurchführung (22) angeordnet ist, wobei jede Ventilbaugruppe (13, 23) zumindest eine Ventilscheibe (14, 24) aufweist, die in einer geschlossenen Ventilstellung auf einem Ventilsitz (15, 25) aufsitzt und so die zugehörige Fluiddurchführung (12, 22) abdeckt, und die in einer geöffneten Ventilstellung zumindest teilweise von dem Ventilsitz (15, 25) beabstandet ist, wobei jede Ventilbaugruppe (13, 23) eine Vorsteuerkammer (16, 26) umfasst, wobei durch Druckbeaufschlagung der Vorsteuerkammer (16, 26) die Ventilscheibe (14, 24) in die geschlossene Ventilstellung vorspannbar ist, wobei der Druck in den jeweiligen Vorsteuerkammern (16, 26) einstellbar ist,
**dadurch gekennzeichnet, dass** wenigstens eine der Vorsteuerkammern (16, 26) durch einen Boden (4), eine relativ zum Boden (4) feststehende zylindrische Seitenwand (5), welche zur Zylinderrohrachse (A) koaxial angeordnet ist, sowie einen radial innerhalb der zylindrischen Seitenwand (5) gehaltenen und parallel zur Zylinderrohrachse (A) bewegbaren formstabil Deckel (6) begrenzt ist.

2. Schwingungsdämpfer (1) nach Anspruch 1, **dadurch gekennzeichnet, dass** der Boden (4) von zumindest einer der Ventilbaugruppen (13, 23) gemeinsam mit dem Kolben (2) auf einem Befestigungszapfen (42) verspannt ist.

3. Schwingungsdämpfer (1) nach einem Ansprüche 1 oder 2, **dadurch gekennzeichnet, dass** die Ventilscheibe (14, 24) durch den formstabilen Deckel (6) gebildet ist.

4. Schwingungsdämpfer (1) nach Anspruch 3, **dadurch gekennzeichnet, dass** die Ventilscheibe (14, 24) von dem Ventilsitz (15, 25) durch eine axiale Bewegung des Deckels (6) lösbar ist.

5. Schwingungsdämpfer (1) nach einem der Ansprüche 1 oder 2, **dadurch gekennzeichnet, dass** die Ventilscheibe (14, 24) separat zum Deckel (6) ausgebildet ist und elastisch verformbar ist, und dass die Ventilscheibe (14, 24) axial zwischen dem Deckel (6) und dem Ventilsitz (15, 25) angeordnet ist.

6. Schwingungsdämpfer (1) nach Anspruch 5, **dadurch gekennzeichnet, dass** der Deckel (6) eine Steuerkante (18) aufweist, an der die Ventilscheibe (14, 24) auf ihrer dem Ventilsitz (15, 25) abgewandten axialen Seite zur Anlage kommt, wobei die Steuerkante (18) radial weiter innen angeordnet ist als der Ventilsitz (15, 25).

7. Schwingungsdämpfer nach einem der Ansprüche 5 oder 6, **dadurch gekennzeichnet, dass** die Ventilscheibe (14, 24) auf derjenigen axialen Seite, die dem Ventilsitz (15, 25) zugewandt ist, im radialen Bereich der Steuerkante (18) frei liegt.

8. Schwingungsdämpfer nach Anspruch 5, **dadurch gekennzeichnet, dass** der Deckel (6) eine Steuerfläche (19) aufweist, an der die Ventilscheibe (14, 24) auf ihrer dem Ventilsitz (15, 25) abgewandten axialen Seite zur Anlage kommt, wobei sich die Steuerfläche (19) radial von innen nach außen betrachtet in axialer Richtung vom Ventilsitz (15, 25) entfernt.

9. Schwingungsdämpfer nach Anspruch 8, **dadurch gekennzeichnet, dass** die Steuerfläche (19) den Ventilsitz (15, 25) radial außen überragt.

10. Schwingungsdämpfer nach einem der vorherigen Ansprüche, **dadurch gekennzeichnet, dass** zur Befüllung der Vorsteuerkammern (16, 26) mit Hydraulikfluid zwischen jeweils einem Arbeitsraum (21, 11) und einer Vorsteuerkammer (16, 26) eine Fluiddurchführung (17, 27) vorgesehen ist, die mit jeweils einer Vordrosselanordnung (43) versehen ist.

11. Schwingungsdämpfer nach Anspruch 10, **dadurch gekennzeichnet, dass** die Vordrosselanordnung (43) eine Bypassscheibe (44) umfasst, welche einen Öffnungsquerschnitt bereitstellt, der kleiner ist als ein minimaler Öffnungsquerschnitt der zugehörigen Fluiddurchführung (17, 26).

12. Schwingungsdämpfer nach einem der Ansprüche 10 oder 11, **dadurch gekennzeichnet, dass** die Vordrosselanordnung (43) ferner eine Deckscheibe (45) aufweist, welche die Bypassscheibe (44) in Richtung einer Öffnung der Fluiddurchführung (17, 27) beaufschlagt.

13. Schwingungsdämpfer nach einem der Ansprüche 10 bis 12, **dadurch gekennzeichnet, dass** die Bypassscheibe (44) am Boden (4) außerhalb der Vorsteuerkammer (16, 26) anliegt.

## Claims

1. Controllable vibration damper (1), in particular for a vehicle chassis, comprising a cylinder tube (10) which comprises a hydraulic fluid which is sealed therein, a piston (2) which can be moved axially within the cylinder tube (10) along a cylinder tube axis (A) and which divides the cylinder tube (10) into two working spaces (11, 21), a piston rod (3) which is oriented parallel to the cylinder tube axis (A) and is connected at one end to the piston (2), a plurality of fluid leadthroughs (12, 22) from one working space (11, 21) into the other working space (21, 11) being provided in the piston (2), a first valve assembly (13) for damping the piston movement in a first actuating direction (R1) being arranged at a first fluid leadthrough (12), and a second valve assembly (23) for damping the piston movement in a second actuating direction (R2) being arranged at a second fluid leadthrough (22), each valve assembly (13, 23) comprising at least one valve disc (14, 24) which, in a closed valve position, is seated on a valve seat (15, 25) and thus covers the associated fluid leadthrough (12, 22), and which, in an open valve position, is spaced apart at least partially from the valve seat (15, 25), each valve assembly (13, 23) comprising a pilot control chamber (16, 26), it being possible for the valve disc (14, 24) to be prestressed into the closed valve position by way of pressurization of the pilot control chamber (16, 26), it being possible for the pressure in the respective pilot control chambers (16, 26) to be set,
**characterized in that** at least one of the pilot control chambers (16, 26) is delimited by way of a bottom (4), a cylindrical side wall (5) which is stationary relative to the bottom (4) and is arranged coaxially with respect to the cylinder tube axis (A), and a dimensionally stable cover (6) which is held radially within the cylindrical side wall (5) and can be moved parallel to the cylinder tube axis (A).

2. Vibration damper (1) according to Claim 1, **characterized in that** the bottom (4) of at least one of the valve assemblies (13, 23) is braced together with the piston (2) on a fastening pin (42).

3. Vibration damper (1) according to either of Claims 1 and 2, **characterized in that** the valve disc (14, 24) is formed by way of the dimensionally stable cover (6).

4. Vibration damper (1) according to Claim 3, **characterized in that** the valve disc (14, 24) can be released from the valve seat (15, 25) by way of an axial movement of the cover (6).

5. Vibration damper (1) according to either of Claims 1 and 2, **characterized in that** the valve disc (14, 24) is configured separately from the cover (6) and can be deformed elastically, and **in that** the valve disc (14, 24) is arranged axially between the cover (6) and the valve seat (15, 25).

6. Vibration damper (1) according to Claim 5, **characterized in that** the cover (6) comprises a control edge (18), against which the valve disc (14, 24) comes to bear on its axial side which faces away from the valve seat (15, 25), the control edge (18) being arranged radially further to the inside than the valve seat (15, 25) .

7. Vibration damper according to either of Claims 5 and 6, **characterized in that** the valve disc (14, 24) is exposed in the radial region of the control edge (18) on that axial side which faces the valve seat (15, 25).

8. Vibration damper according to Claim 5, **characterized in that** the cover (6) comprises a control face (19), against which the valve disc (14, 24) comes to bear on its axial side which faces away from the valve seat (15, 25), the control face (19) moving away from the valve seat (15, 25) in the axial direction as viewed radially from the inside to the outside.

9. Vibration damper according to Claim 8, **characterized in that** the control face (19) protrudes beyond the valve seat (15, 25) radially to the outside.

10. Vibration damper according to one of the preceding claims, **characterized in that**, in order to fill the pilot control chambers (16, 26) with hydraulic fluid, a fluid leadthrough (17, 27) which is provided with in each case one pilot throttle arrangement (43) is provided between in each case one working space (21, 11) and a pilot control chamber (16, 26).

11. Vibration damper according to Claim 10, **characterized in that** the pilot throttle arrangement (43) comprises a bypass plate (44) which provides an opening cross section which is smaller than a minimum opening cross section of the associated fluid leadthrough (17, 26) .

12. Vibration damper according to either of Claims 10 and 11, **characterized in that**, furthermore, the pilot throttle arrangement (43) comprises a cover disc (45) which loads the bypass disc (44) in the direction of an opening of the fluid leadthrough (17, 27).

13. Vibration damper according to one of Claims 10 to 12, **characterized in that** the bypass disc (44) lies against the bottom (4) outside the pilot control chamber (16, 26).

## Revendications

1. Amortisseur de vibrations réglable (1), destiné en particulier à un mécanisme de roulement de véhicule, ledit amortisseur de vibrations comprenant un tube cylindrique (10) dans lequel un fluide hydraulique est disposé de manière étanche, un piston (2) qui peut être déplacé axialement à l'intérieur du tube cylindrique (10) le long d'un axe de tube cylindrique (A) et qui divise le tube cylindrique (10) en deux espaces de travail (11, 21), une tige de piston (3) qui est orientée parallèlement à l'axe du tube cylindrique (A) et qui est raccordée, à une extrémité, au piston (2), une pluralité de passages de fluide (12, 22) allant d'un espace de travail (11, 21) dans l'autre espace de travail (21, 11) étant prévus dans le piston (2), un premier ensemble de soupape (13) destiné à amortir le mouvement du piston dans une première direction d'actionnement (R1) étant disposé au niveau d'un premier passage de fluide (12) et un deuxième ensemble de soupape (23) destiné à amortir le mouvement du piston dans une deuxième direction d'actionnement (R2) étant disposé au niveau d'un deuxième passage de fluide (22), chaque ensemble de soupape (13, 23) comportant au moins un disque de soupape (14, 24) qui repose, dans une position de soupape fermée, sur un siège de soupape (15, 25) et recouvre ainsi le passage de fluide associé (12, 22) et qui est espacé, dans une position de soupape ouverte, au moins partiellement du siège de soupape (15, 25), chaque ensemble de soupape (13, 23) comprenant une chambre pilote (16, 26), le disque de soupape (14, 24) pouvant être précontraint dans la position de soupape fermée par mise sous pression de la chambre pilote (16, 26), la pression dans les chambres pilotes respectives (16, 26) étant réglable, **caractérisé en ce que** l'une au moins des chambres pilotes (16, 26) est délimitée par un fond (4), une paroi latérale cylindrique (5) qui est fixe par rapport au fond (4) et qui est disposée coaxialement à l'axe (A) du tube cylindrique et un couvercle (6) de forme stable qui est maintenu radialement à l'intérieur de la paroi latérale cylindrique (5) et qui peut être déplacé parallèlement à l'axe (A) du tube cylindrique.

2. Amortisseur de vibrations (1) selon la revendication 1, **caractérisé en ce que** le fond (4) est précontraint sur une broche de fixation (42) par au moins l'un des ensembles de soupape (13, 23) conjointement avec le piston (2).

3. Amortisseur de vibrations (1) selon l'une des revendications 1 et 2, **caractérisé en ce que** le disque de soupape (14, 24) est formé par le couvercle (6) de forme stable.

4. Amortisseur de vibrations (1) selon la revendication 3, **caractérisé en ce que** le disque de soupape (14, 24) peut être libéré du siège de soupape (15, 25) par un mouvement axial du couvercle (6).

5. Amortisseur de vibrations (1) selon l'une des revendications 1 et 2, **caractérisé en ce que** le disque de soupape (14, 24) est conçu pour être séparé du couvercle (6) et est déformable élastiquement et **en ce que** le disque de soupape (14, 24) est disposé axialement entre le couvercle (6) et le siège de soupape (15, 25).

6. Amortisseur de vibrations (1) selon la revendication 5, **caractérisé en ce que** le couvercle (6) comporte un bord de commande (18) sur lequel le disque de soupape (14, 24) vient en appui sur son côté axial opposé au siège de soupape (15, 25), le bord de commande (18) étant disposé radialement plus à l'intérieur que le siège de soupape (15, 25).

7. Amortisseur de vibrations selon l'une des revendications 5 et 6, **caractérisé en ce que** le disque de soupape (14, 24) est situé de manière libre, du côté axial qui fait face au siège de soupape (15, 25), dans la région radiale du bord de commande (18).

8. Amortisseur de vibrations selon la revendication 5, **caractérisé en ce que** le couvercle (6) comporte une surface de commande (19) sur laquelle le disque de soupape (14, 24) vient en appui sur son côté axial opposé au siège de soupape (15, 25), la surface de commande (19) étant distante du siège de soupape (15, 25) lorsque l'on regarde radialement de l'intérieur vers l'extérieur dans la direction axiale.

9. Amortisseur de vibrations selon la revendication 8, **caractérisé en ce que** la surface de commande (19) fait saillie du siège de soupape (15, 25) radialement à l'extérieur.

10. Amortisseur de vibrations selon l'une des revendications précédentes, **caractérisé en ce que**, pour remplir les chambres pilotes (16, 26) avec un fluide hydraulique, un passage de fluide (17, 27), pourvu d'un dispositif étrangleur (43), est ménagé entre un espace de travail respectif (21, 11) et une chambre pilote (16, 26) .

11. Amortisseur de vibrations selon la revendication 10, **caractérisé en ce que** le dispositif étrangleur (43) comprend un disque de dérivation (44) qui présente une section transversale d'ouverture qui est inférieure à la section d'ouverture minimale du passage de fluide associé (17, 26).

12. Amortisseur de vibrations selon l'une des revendications 10 et 11, **caractérisé en ce que** le dispositif étrangleur (43) comprend en outre une plaque de recouvrement (45) qui contraint le disque de dérivation (44) en direction d'une ouverture du passage de fluide (17, 27).

13. Amortisseur de vibrations selon l'une des revendications 10 à 12, **caractérisé en ce que** le disque de dérivation (44) est en appui sur le fond (4) à l'extérieur de la chambre pilote (16, 26).
